# EUROPEAN PATENT APPLICATION

(11) **EP 4 664 171 A1**
(43) Date of publication of application: **17.12.2025**
(21) Application number: 25179389.9
(22) Date of filing: 28.05.2025
(51) Int. Cl.: G02B 6/38, G02B 21/00

(54) **OPTICAL FIBER ENDFACE INSPECTION MICROSCOPE CONFIGURABLE FOR INSPECTION OF ANGLED- AND NON-ANGLED-POLISHED CONNECTORS**

(30) Priority: 14.06.2024 US 202463659970 P
(71) Applicant: EXFO Inc., Québec, QC G1M 2K2 (CA)
(72) Inventor: COTE, Olivier, Québec, G1M 2K2 (CA); FILION, Jean, Québec, G1M 2K2 (CA)
(74) Representative: Gregory, Alexandra Louise

(57) **Abstract**

There is therefore provided an optical-fiber connector endface inspection microscope device that can support inspection of both angled-polished (APC) and non-angled-polished (UPC) optical-fiber connectors without the need to change the adapter tip. Adapter tips are still needed to adapt the microscope device to different formats of connectors, but they can be small, straight, and low cost, and most of all, they don't need to be changed between APC and UPC connector inspection. This can be achieved using an inspection microscope device comprising two modes of operation, i.e., one for UPC inspection and one for APC inspection, which are associated with distinct illumination paths.

## Description

### TECHNICAL FIELD

The present description generally relates to inspection of optical-fiber connector endfaces, and more particularly to optical-fiber connector endface inspection microscopes adapted to inspect both angled- and non-angled-polished optical-fiber connectors.

### BACKGROUND

The quality and cleanliness of endfaces of optical-fiber connectors represent important factors for achieving adequate system performance of optical communication networks. Indeed, any contamination of or damage on the mating surface of an optical-fiber connector may severely degrade signal integrity. Optical-fiber inspection microscopes are commonly employed to visually inspect and/or to analyze the optical-fiber endface of an optical-fiber connector at installation or during maintenance of optical communication networks, in order to verify the quality of the optical-fiber connection.

Because of the wide variety of optical-fiber connector types deployed in the telecommunication industry, optical-fiber connector endface inspection microscopes are typically employed with interchangeable adapter tips so as to allow inspection of various types of optical-fiber connectors directly or as inserted in an optical-fiber connector adapter. Optical-fiber connector endface inspection microscopes are therefore typically designed for use with an adapter tip selected among a plurality of adapter tip types.

Optical-fiber connectors now used in the industry can be split angled-polished physical-contact (APC) or non-angled-polished physical-contact (UPC). Conventionally, existing optical-fiber connector endface inspection microscopes are natively designed for inspecting non-angled-polished (UPC) optical-fiber connectors. Angled-polished (APC) optical-fiber connectors may be inspected using special adapter tips designed to support such connectors.

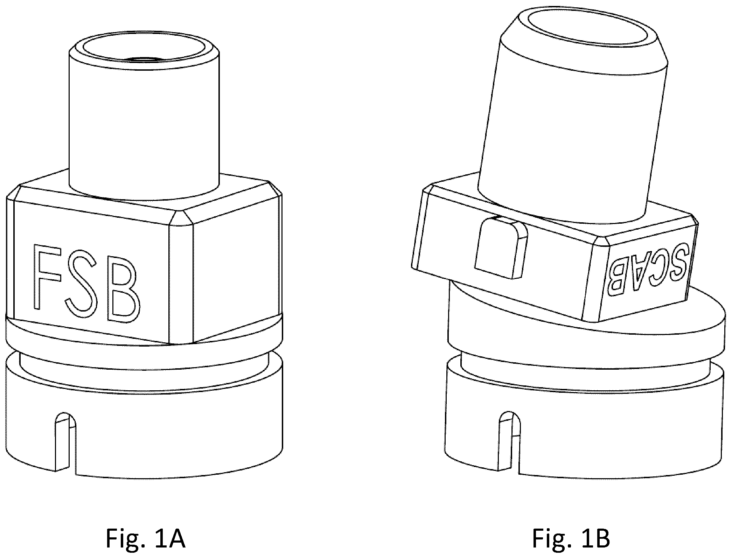

As shown in Fig. 1A, adapter tips designed for inspecting non-angled-polished (UPC) optical-fiber connectors may consist of simple mechanical adapters. They are made straight and typically comprise no optical component. They can thus be manufactured at relatively low cost.

In order to appropriately image the optical-fiber endface, illumination light reflected from the endface should be appropriately collected by the inspection microscope. This typically necessitates that the imaging axis of the inspection microscope system be aligned perpendicularly to the inspected endface. Therefore, as shown in Fig. 1B, adapter tips designed for inspecting angled-polished (APC) optical-fiber connectors are inevitably more complex. An 8-degree angle is manufactured in the adapter tip in order to position the angled-polished (APC) connector so as to align the imaging axis of the inspection microscope system perpendicularly to the inspected endface. The manufacturing process of such adapter tip substantially impact the cost when compared to adapter tips for non-angled-polished connectors (i.e., about three times the cost of a UPC adapter tips).

In any case, because of the requirement for perpendicular alignment to the inspected endface, distinct adapter tips are needed for inspection of UPC and APC connectors even if the connector format is otherwise the same (same connector type). This requirement not only multiplies the number of adapter tips required in order to cover all the potential connector types that may be encountered in the field, but also increases the number of times adapter tips need to be changed on a typical day of work.

There therefore remains a need for an optical-fiber connector endface inspection microscope solution that allows inspection of optical-fiber connectors at lower cost.

### SUMMARY

There is therefore provided an optical-fiber connector endface inspection microscope device that can support inspection of both angled-polished (APC) and non-angled-polished (UPC) optical-fiber connectors without the need to change the adapter tip. Adapter tips are still needed to adapt the microscope device to different formats of connectors, but they can be small, straight, and low cost, and most of all, they do not need to be changed between APC and UPC connector inspection. This can be achieved using an inspection microscope device comprising two modes of operation, i.e., one for UPC inspection and one for APC inspection, which are associated with distinct illumination paths. In the UPC mode of operation, illumination light exits the inspection microscope device substantially aligned with the optical-fiber axis of the inspected optical-fiber connector. In the APC mode of operation, illumination light exits the inspection microscope device at an angle that is substantially egal to 8 degrees, so as to illuminate the connector endface in a direction that is substantially normal to the angled-polished connector endface under inspection.

There is no need for optical components in the adapter tips. All the optical components can be held within the housing of the inspection microscope device.

The two modes of operation may be obtained using distinct illumination paths, wherein these illumination paths are transversally offset from one another relative to the optical axis of the objective lens system of the inspection microscope probe.

In accordance with one aspect, there is provided an optical-fiber connector endface inspection microscope device for inspecting an endface of either an angled-polished or a non-angled-polished optical-fiber connector, the optical-fiber connector endface inspection microscope device comprising:
an illumination source generating illumination light for illuminating the endface to be inspected in accordance with a first mode of operation and a second mode of operation, wherein in said first mode of operation, said illumination light propagates along a first illumination path and, in said second mode of operation, said illumination light propagates along a second illumination path that is transversally offset relative to said first illumination path;
an image detector for capturing at least one image of the endface to be inspected from light returned from the endface;
an objective lens system comprising at least one objective lens to produce an image of the endface to be inspected on the image detector, the objective lens system defining an optical axis;
relay optics receiving said illumination light for illuminating the connector endface, and configured to deviate said first illumination path so as to illuminate the connector endface in a direction that is substantially normal to an angled-polished connector endface to be inspected and relay said second illumination path so as to illuminate the connector endface in a direction that is substantially normal to a non-angled-polished connector endface to be inspected; and
a housing structure enclosing said illumination source, said image detector, said objective lens system and said relay optics, said housing structure being releasably connectable to an adapter tip for mechanically interfacing with the optical-fiber connector.

In accordance with another aspect, there is provided an optical-fiber connector endface inspection microscope system for inspecting an endface of either a non-angled-polished or an angled-polished optical-fiber connector, the optical-fiber connector endface inspection microscope system comprising:
an optical-fiber connector endface inspection microscope device comprising:
   an illumination source generating illumination light for illuminating the endface to be inspected, wherein in a first mode of operation said illumination light propagates along a first illumination path and in a second mode of operation said illumination light propagates along a second illumination path that is transversally offset relative to said first illumination path;
      an image detector for capturing at least one image of the endface to be inspected from light returned from the endface;
      an objective lens system comprising at least one objective lens to produce an image of the endface to be inspected on the image detector, the objective lens system defining an optical axis;
   relay optics receiving said illumination light for illuminating the connector endface, and configured to, in a first mode of operation, deviate said first illumination path so as to illuminate the connector endface in a direction that is substantially normal to the angled-polished connector endface to be inspected and, in a second mode of operation, relay said second illumination path so as to illuminate the connector endface in a direction that is substantially normal to the non-angled-polished connector endface to be inspected; and
   a housing structure enclosing said illumination source, said image detector, said objective lens system and said relay optics, said housing structure being releasably connectable to an adapter tip for mechanically interfacing with the optical-fiber connector;
   wherein said housing structure comprises a main housing and an optical head connectable to the main housing, said relay optics being enclosed in the optical head; and
an adapter tip releasably connectable to the optical head, for mechanically interfacing with the optical-fiber connector to be inspected and configured to position the connector endface on an object plane for inspection such that an optical fiber axis of said optical-fiber connector is substantially parallel to the optical axis of said objective lens system.

In some embodiments, one of the illumination paths is aligned with the optical axis of the objective lens and the other is offset.

In some embodiments, the optical axes of all lenses of the inspection microscope device (including the objective lens system and relay lenses) may be aligned. Advantageously, such construction keeps all components optimally compact transversally and may also further contribute to reducing the manufacturing cost of the solution.

In some embodiments, in said first mode of operation, illumination light exits said housing structure along said first illumination path that is at an angle of about 8 degrees relative to the optical axis of the objective lens system.

In some embodiments, said housing structure comprises a main housing and an optical head connectable to the main housing; wherein the optical head is releasably connectable to an adapter tip for mechanically interfacing with the optical-fiber connector to be inspected and defining a position of the connector endface on an object plane for inspection; and wherein said relay optics are enclosed in the optical head.

In some embodiments, the adapter tip is interchangeable with other adapter tips to allow inspection of various types of optical-fiber connectors, whereas the optical head and the adapter tip remains the same for inspection of both angled-polished and non-angled-polished versions of the same type of optical-fiber connector.

In some embodiments, said illumination source comprises a first light source and a second light source for generating illumination light to said first illumination path and to said second illumination path, respectively.

In some embodiments, in a first mode of operation, said first light source is activated and said second light source is deactivated; and, in a second mode of operation, said first light source is deactivated and said second light source is activated.

In some embodiments, said first light source and said second light source are activated concurrently such that said first mode of operation and said second mode of operation are concurrently active.

In some embodiments, said second illumination path is transversally offset relative to the optical axis of the objective lens so as to deviate said second illumination path from said optical axis through said objective lens.

In some embodiments, said relay optics comprises: a first relay lens and a second relay lens along both said first and said second illumination paths and receiving illumination light from said objective lens system, wherein said first relay lens and said second relay lens contribute to deviate said second illumination path back to an angle of about 0 degrees relative to the optical axis of said objective lens at an output of said relay optics.

In some embodiments, said first illumination path is substantially aligned with an optical axis of the objective lens, and said first relay lens and said second relay lens contribute to deviate said first illumination path to an angle of about 8 degrees relative to the optical axis of said objective lens at an output of said relay optics.

In some embodiments, said relay optics further comprises: a first refracting plane surface and a second refracting plane surface in-between said first relay lens and second relay lens, wherein said first refracting plane surface and said second refracting plane surface are both tilted relative to optical axes of said first relay lens and second relay lens so as to, together with said first relay lens and said second relay lens, deviate said first illumination path at an angle that is substantially egal to 8 degrees relative to the optical axis of said objective lens system when said illumination light exits said relay optics.

In some embodiments, optical axes of said objective lens system, said first relay lens and second relay lens are substantially parallel to an optical fiber axis of said optical-fiber connector during inspection.

In some embodiments, optical axes of said objective lens system and of said first relay lens and second relay lens are all substantially aligned to a center of the connector endface during inspection.

In some embodiments, said relay optics comprise a first optical wedge and a second optical wedge along said first and second illumination paths, wherein a surface of said first optical wedge defines said first refracting plane surface and a surface of said second optical wedge defines said second refracting plane surface.

In some embodiments, said angle of said illumination path at the exit of said housing structure relative to the optical axis of said objective lens is between 6 and 10 degrees.

In some embodiments, said angle of said illumination path at the exit of said housing structure relative to the optical axis of said objective lens is between 7 and 9 degrees.

In this specification, unless otherwise mentioned, word modifiers such as "substantially" and "about" which modify a value, condition, relationship or characteristic of a feature or features of an embodiment, should be understood to mean that the value, condition, relationship or characteristic is defined to within tolerances that are acceptable for proper operation of this embodiment in the context its intended application. In particular, the term "about" generally refers to a range of numbers that one skilled in the art would consider equivalent to the stated value (e.g., having the same or an equivalent function or result). In some instances, the term "about" may mean a variation of ±10% of the stated value. It is noted that all numeric values used herein are assumed to be modified by the term "about", and that all conditions, relationships or characteristics used herein are assumed to be modified by the term "substantially", unless stated otherwise. The term "between" is used herein to refer to a range of numbers or values defined by endpoints is intended to include both endpoints, unless stated otherwise.

Further features and advantages of the present invention will become apparent to those of ordinary skill in the art upon reading of the following description, taken in conjunction with the appended drawings.

The following description is provided to gain a comprehensive understanding of the methods, apparatus and/or systems described herein. Various changes, modifications, and equivalents of the methods, apparatuses and/or systems described herein will suggest themselves to those of ordinary skill in the art. Description of well-known functions and structures may be omitted to enhance clarity and conciseness.

Although some features may be described with respect to individual exemplary embodiments, aspects need not be limited thereto such that features from one or more exemplary embodiments may be combinable with other features from one or more exemplary embodiments.

### BRIEF DESCRIPTION OF THE DRAWINGS

Fig. 1A is a perspective view of an adapter tip designed for inspecting non-angled-polished (UPC) optical-fiber connectors, in accordance with one embodiment.
Fig. 1B is a perspective view of an adapter tip designed for inspecting angled-polished (APC) optical-fiber connectors, in accordance with one embodiment.
Fig. 2 is a perspective view of an optical-fiber connector endface inspection microscope system, in accordance with one embodiment.
Fig. 3A is a schematic illustrating the optical components of the connector endface inspection microscope system of Fig. 2, along with light rays along the first illumination path, i.e., from the illumination source to the connector endface under inspection, in accordance with one embodiment employing optical wedges.
Fig. 3B is a schematic illustrating the optical components of the connector endface inspection microscope system of Fig. 2, along with light rays that are reflected on the APC connector endface and that propagate to the image detector along an imaging path, in accordance with the embodiment of Fig. 3A.
Fig. 4A is a schematic illustrating the optical components of the connector endface inspection microscope system of Fig. 2, along with light rays along the second illumination path, i.e., from the illumination source to the connector endface under inspection, in accordance with one embodiment employing optical wedges.
Fig. 4B is a schematic illustrating the optical components of the connector endface inspection microscope system of Fig. 2, along with light rays that are reflected on the UPC connector endface and that propagate to the image detector along an imaging path, in accordance with the embodiment of Fig. 4A.
Fig. 5A is an elevation view of an optical head of the optical-fiber connector endface inspection microscope system of Fig. 2, along with an adapter tip designed for interfacing with Pushlok^{™} connectors, in accordance with one embodiment.
Fig. 5B is an elevation view of an optical head of the optical-fiber connector endface inspection microscope system of Fig. 2, along with an adapter tip designed for interfacing with SC connectors, in accordance with one embodiment.
Fig. 6 is a perspective view of the optical head and adapter tip of Fig. 5B showed as exploded from one another.
Fig. 7 is an exploded perspective view of the optical head of Figs. 5A and 5B showing the optical sub-cell assembly, in accordance with one embodiment.
Fig. 8A is a schematic illustrating the optical components of the connector endface inspection microscope system of Fig. 2, along with light rays along the first illumination path, in accordance with another embodiment employing an optical prism.
Fig. 8B is a schematic illustrating the optical components of the connector endface inspection microscope system of Fig. 2, along with light rays along the second illumination path, in accordance with another embodiment employing an optical prism.
Fig. 9A is a schematic illustrating the optical components of the connector endface inspection microscope system of Fig. 2, , along with light rays along the first illumination path, in accordance with another embodiment employing no optical wedge and no optical prism.
Fig. 9B is a schematic illustrating the optical components of the connector endface inspection microscope system of Fig. 2, , along with light rays along the second illumination path, in accordance with another embodiment employing no optical wedge and no optical prism.
Fig. 10 is a schematic illustrating the optical components of a connector endface inspection microscope system, in accordance with another embodiment wherein the optical head is bent.
Fig. 11 is a block diagram illustrating an example architecture of the inspection microscope device of the system of Fig. 2.

### DETAILED DESCRIPTION

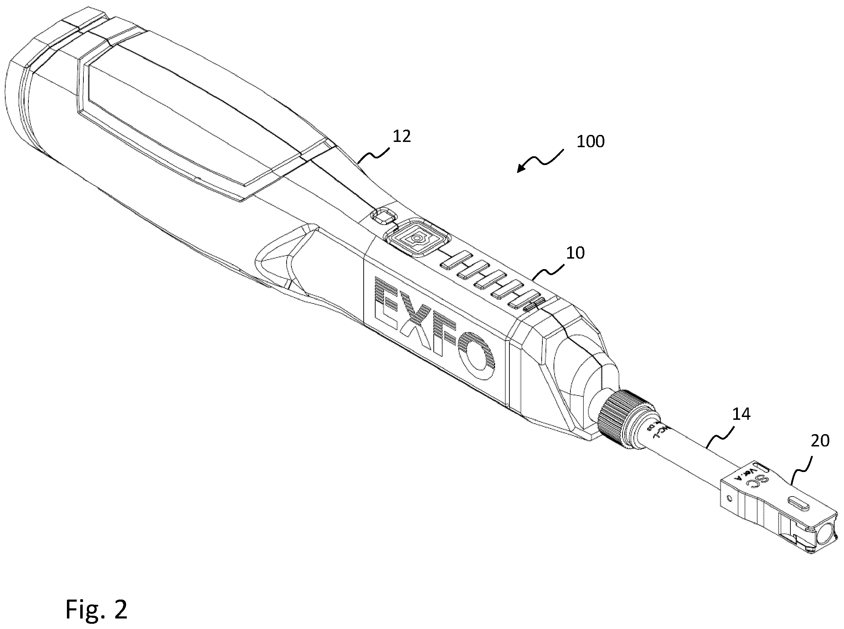

Now referring to the drawings, Fig. 2 illustrates an optical-fiber connector endface inspection microscope system comprising a microscope device 100 and an adapter tip 20 that is releasably connectable to the microscope device 100 for interfacing with the optical-fiber connector to be inspected. The optical-fiber connector endface inspection microscope device 100 has a housing structure 10 comprising a main housing 12 and an optical head 14 connectable to the main housing 12.

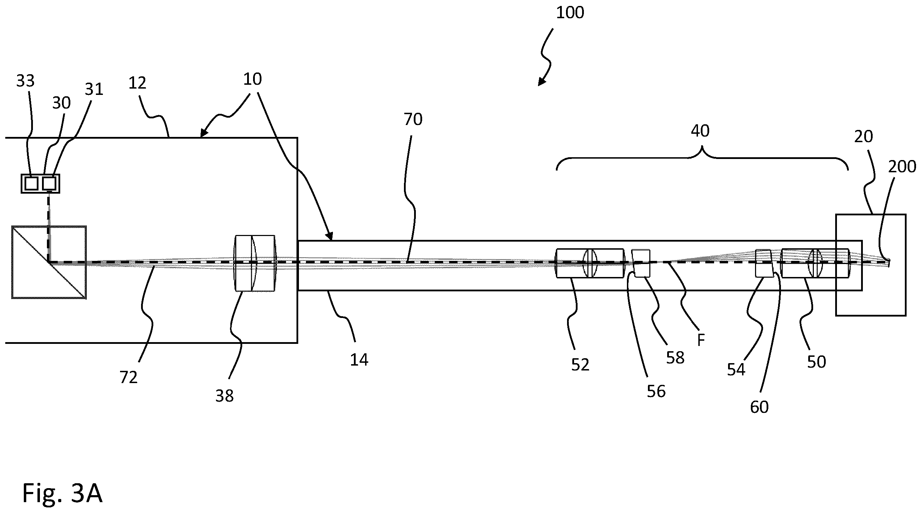

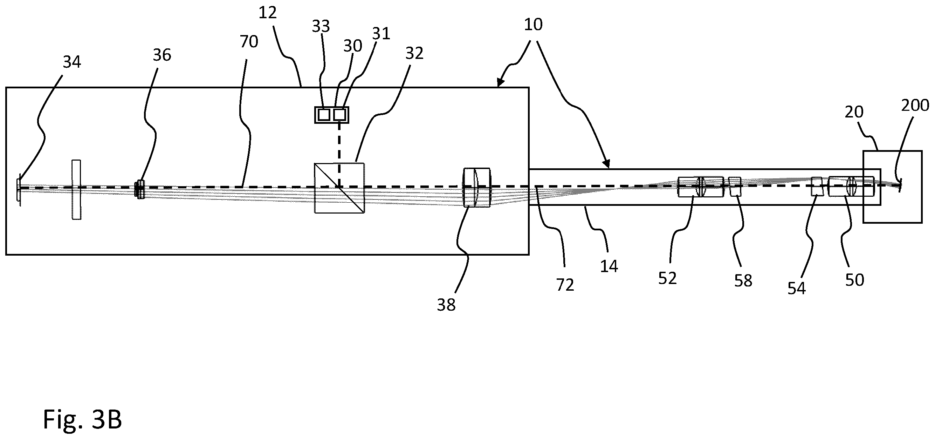

Referring to Fig. 3, which comprises Fig. 3A, Fig. 3B and Fig. 3C, the optical-fiber components of the connector endface inspection microscope system of Fig. 2 are described. Fig. 3A illustrates light rays along the illumination path, i.e., from the illumination source 30 to the connector endface 200 under inspection, whereas Fig. 3B illustrates light rays that are reflected on the connector endface 200 and that propagate to the image detector 34 along an imaging path.

It will be understood that the configuration of Fig. 3 illustrates one example embodiment of an optical-fiber connector endface inspection microscope system. It should be appreciated by those of ordinary skill in the art that multiple variations of the inspection microscope can be envisaged by persons skilled in the art and that the embodiment illustrated herein is no way meant to be limitative.

Referring to Fig. 3, generally, an optical-fiber connector endface inspection microscope device 100 incorporates an imaging assembly comprising an illumination source 30 for generating illumination light for illuminating the connector endface 200 to be inspected, an illumination beam splitter 32 to direct illumination light toward the connector endface (may be replaced, e.g., by a partly reflecting mirror, partly reflecting wedge or the like), an image detector 34 (such as a CMOS) for capturing at least one image of the endface to be inspected, and imaging optics. The imaging optics comprises an objective lens system (and optionally other lenses, mirrors and/or other optical components), for imaging the illuminated connector endface on an image plane coinciding with the image detector 34. The object plane as defined herein is determined by the objective lens system and coincides with the plane where the connector endface to be inspected (i.e., the object) should be positioned (within the focusing range of the objective lens system) to be suitably imaged on the image detector 34. More specifically, here, the objective lens system comprises a focusing lens 36 for adjusting a focus of the objective lens system on the image detector 34 and at least one fixed objective lens 38.

The illumination source 30, the image detector 34 and the objective lens system (including the focusing lens 36 and the fixed objective lens 38) are enclosed in the main housing 12.

In the embodiment of Fig. 3, the focusing lens 36 is embodied as a deformable focusing lens but in other embodiments, the focus may be adjusted by moving the focusing lens using an actuator. It will be understood that the objective lens system may further comprise other lenses or optical elements as required by the optical design, which lenses and optical elements can be either fixed relative to the microscope system or movable, e.g., held fixed with the focusing lens.

The imaging optics further comprises relay optics 40 receiving illumination light from the objective lens 38 and relaying it to the connector endface for illumination thereof. As described in more detail hereinbelow, the relay optics 40 is configured to direct illumination light so that it is normally incident to the connector endface 200 under inspection.

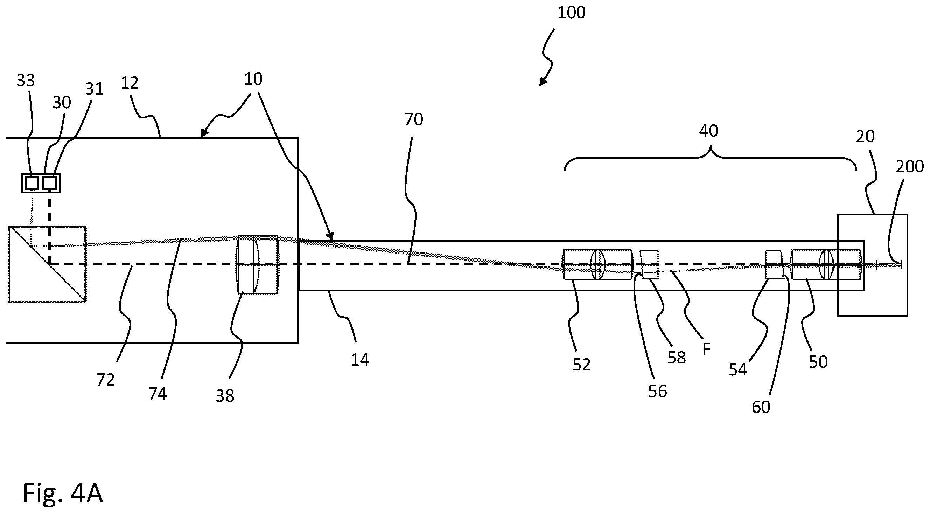

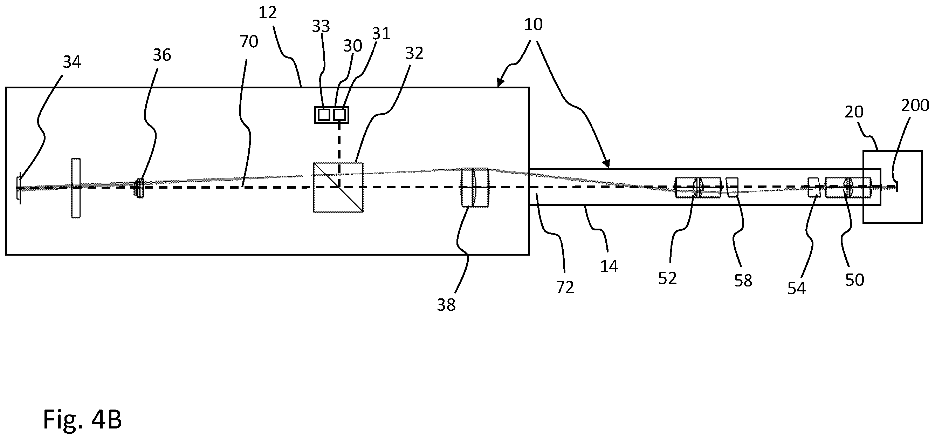

In the embodiment of Figs. 3 and 4, the relay optics 40 is enclosed in an optical head 14 which is made long and thin for easier access to the connector endface to be inspected, even if the connector is recessed in a bulkhead. In the embodiment of Fig. 3, the optical head 14 is made releasably connectable to the main housing 12 but is it noted that, in other embodiments, the main housing 12 and the optical head 14 may be made as a single piece and may therefore not be disconnectable from one another. It is noted that the optical head 14 shall not be confused with the adapter tip 20 in that the optical head 14 remains the same for varied types of optical-fiber connectors to be inspected and does not directly interface with the optical-fiber connector.

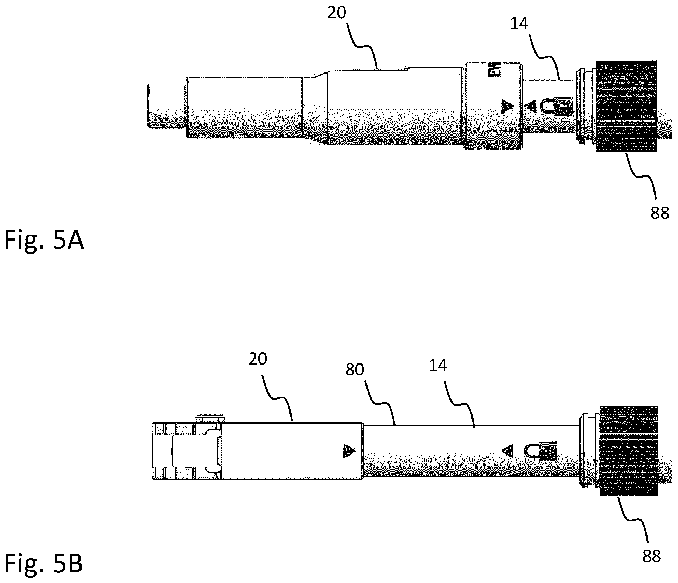

In contrast, the adapter tip 20 is used to mechanically interface with the optical-fiber connector and is interchangeable to change the mechanical interface in order to adapt to various types of optical-fiber connectors (see Figs. 5A and 5B). The adapter tip 20 has a shape that is configured to easily engage with the optical-fiber connector to be inspected (directly or as inserted in a bulkhead) and to position the optical-fiber connector endface on the object plane of the objective lens system. In the embodiment of Fig. 3, the adapter tips 20 are further shaped and configured to position the optical-fiber connector so that an optical fiber axis of said optical-fiber connector is substantially parallel, and optionally coincident, with the optical axis 70 of the objective lens system.

Also, the relay optics 40 are assembled inside the optical head 14 and there are no optical components needed in the adapter tip 20. This allows to not duplicate optical components from one adapter tip to another. In the prior art, when designing adapter tips, the working distance, optical components and general layout often changed from one adapter tip to another. By placing all the optical components in the optical head 14, all parameters of the optical system stay the same. The adapter tip 20 is simply used to adapt the mechanical interface to the specific optic-fiber connector or bulkhead format under inspection, hence reducing the complexity when designing a new adapter tips.

Moreover, as described hereinbelow, the embodiments described and illustrated herein advantageously allow to use the same adapter tip 20 for inspecting both APC and UPC versions of the same type of optical-fiber connector.

The adapter tip 20 may have a substantially elongated hollow member and the optical head 14 be configured so that, when interconnected, at least part of the optical head interlocks into the hollow member of the adapter tip 20 so that the relay optics 40 of the optical head 14 lie within the adapter tip 20. This configuration allows the relay optics 40 to be located close to the connector endface under inspection, i.e., near the inspection end of the optical-fiber inspection microscope device 100.

The optical-fiber connector endface inspection microscope system provides a long reach inspection microscope that is straight and centered on the optical-fiber connector endface 200 during inspection. The main difficulties for achieving a linear microscope from the objective lens system to the connector endface under inspection are in the control of the illumination and in image quality. The optical design of Fig. 3 allows to control the illumination path from the illumination source 30 to the connector endface 200 and from the connector endface 200 to the image detector 34 in a way that it reaches the connector endface in a direction that is substantially normal to either the APC or the UPC connector endface, and is reflected to reach the image detector 34 with a good imaging quality.

For both APC and UPC connector inspection, optimal illumination is obtained when the illumination light beam is substantially normal to the inspected connector endface 200 and substantially or close to be collimated (slightly convergent or slightly divergent). These conditions are obtained by use of the relay optics 40.

To obtain such illumination, relay optics 40 is included in the optical head 14, so as to be positioned as close as possible to the connector endface under inspection. The relay optics 40 comprise a first relay lens 50 and a second relay lens 52 along said illumination path, which first and second relay lenses define a focal point F. It further comprises a first optical wedge 54 defining a first refracting plane surface 56 and a second optical wedge 58 defining a second refracting plane surface 60, both located in-between said first and second relay lenses 50, 52, wherein said first refracting plane surface and said second refracting plane surface are both tilted relative to the optical axis 70 of the objective lens system.

To obtain the collimated beam (or close to collimated), the distance between the two relay lenses 50, 52 corresponds (or is close) to the sum of the focal distance F1 of the first relay lens and the focal distance F2 of the second relay lens (F1 + F2). The focal point F is defined in-between the relay lenses 50, 52 at a distance F1 from the first relay lens 50 (and therefore F2 from the second relay lens 52). The illumination source 30 is positioned at a distance F3 from the objective lens 38 which corresponds to its focal distance F3 and illumination light therefore arrives substantially collimated or, as shown herein, slightly convergent on the second relay lens 52. This configuration creates a substantially collimated beam or slightly convergent shape which maximizes light reflected back into the objective lens system. In is noted that if the beam was substantially divergent, light reflected on the connector endface would also be divergent after the reflection and some of it would not reach the objective lens system. On the other hand, a substantially convergent beam would reduce the illuminated area on the connector endface 200.

In the embodiment of Fig. 3, the focal point F is between the first and second relay lenses 50, 52, but closer to second relay lenses 52. It is however noted that in other embodiment, the focal point F may be defined between the objective lens 38 and the second relay lens 52, thereby creating a converging illumination beam on the inspected connector endface 200.

The optical path between the object plane and the image plane defines an imaging path of the inspection microscope, along which propagates the inspection light beam resulting from reflection of illumination light on the connector endface (specular and/or diffuse reflection), for optical magnification of the object (i.e., the connector endface) positioned on the object plane.

The path followed by the illumination light beam between the illumination light source and the object plane defines an illumination path of the inspection microscope. Here, in order to support inspection of either a non-angled-polished (UPC) or an angled-polished (APC) optical-fiber connector, the illumination source 30 comprises a first light source 31 and a second light source 33, which are offset from one another, so as to respectively define a first illumination path 72 (see Fig. 3A) and a second illumination path 74 (see Fig. 4A), which are transversally offset from one another in the objective lens system. The two light sources 31, 33 may be activated one at a time so as to define two modes of operation of the inspection microscope, i.e., one for APC inspection and one for UPC inspection.

The first light source 31 is used in the APC mode of operation. In the APC mode of operation, illumination light propagates substantially aligned with an optical axis of the objective lens 38. The relay optics 40 cause the illumination path from the first light source 31 to be deviated so that illumination light exits the inspection microscope device at an angle that is substantially egal to 8 degrees. The APC connector endface is therefore illuminated in a direction that is substantially normal thereto.

The second light source 33 is used in the UPC mode of operation. In the UPC mode of operation, illumination light propagates through the objective lens 38 and relay optics 40 slightly offset from the optical axis 70 of the objective lens system. The objective lens 38 then cause the illumination path from the second light source 33 to be deviated but the relay optics 40 deviates it back aligned with the optical axis 70 of the objective lens system so that illumination light exits the inspection microscope device substantially normal to the UPC connector endface under inspection.

It is noted that although in the illustrated embodiment, the distinct illumination paths are provided using two distinct illumination light sources, in other embodiments, distinct illumination paths may be provided using a single illumination light source which path is deviated or split by optical means such, as an optical beam splitter, an axicon or a movable mirror for example.

In the embodiment described hereinabove, the two light sources 31, 33 may be activated one at a time so as to define the two modes of operation of the inspection microscope, i.e., APC and UPC.

It is noted that, in some embodiments, the selection of which mode of operation to use for a given inspection may made by a user of the inspection microscope device depending on the optical-fiber connector being currently inspected, e.g., by manual input in a user interface. In other embodiments, the selection of which mode of operation to activate for inspection may be automated by software.

In other implementations, the two light sources 31, 33, may be activated concurrently so that both modes of operation are concurrently active to concurrently support either APC or UPC connector inspection. In such way, no matter the connector being actually inspected (APC or UPC), it will always receive illumination light. It was discovered that activating the wrong mode of operation for a given optical-fiber connector (activating UPC instead of APC or vice-versa) may not produce an image of the connector endface on the image detector 34 (except for some stray light, illumination light does not reflect back to the image detector 34). For this reason, in some embodiments, both modes of operations may be activated at the same time and only one image will form on the image detector 34 (although stray light may introduce some noise in the image).

In order to illuminate the connector endface in a direction that is substantially normal to the APC endface, the collimated beam is tilted at an angle of 8 degrees relative to the optical axis 70 of the objective lens system when exiting said relay optics 40. In the embodiment of Fig. 3, this is achieved by transversally offsetting the illumination path and the focal point F in-between the relay lenses 50, 52 relative to the optical axis 70. If a source point is located at the focal distance of a lens and it is transversally offset from the center of the lens, the resultant collimated beam is tilted. The angle of the tilt is related to the effective focal length (EFL) of the lens and the offset of the source point. Smaller EFL needs less transversal offset to obtain the 8-degree angle.

In the embodiment of Figs. 3 and 4, the focal point F of the illumination beam between the two relay lenses 50, 52 is transversally offset using a pair of optical wedges 54, 58 positioned in-between the relay lenses 50, 52. The two optical wedges 54, 58 are separated by an air gap. The offset is created by the refraction at the angled refracting plane surfaces 56, 60 of the wedges 54, 58 and the length of the air gap between the two wedges 54, 58. When light reaches the first refracting plane surfaces 56, an orientation of the illumination path is deviated slightly to create the offset. When reaching the second refracting plane surface 60, a second refraction occurs, and the illumination path is deviated back to its original orientation (before the first wedge 58) but offset. The angle of the refracting plane surfaces and the distance between them define the offset. It is noted that a proper optical design may need to balance the offset and the optical quality because too much tilt of the wedge may impair the optical quality.

In the illustrated case, it is a key requirement that the optical components be transversally compact. The amplitude of the offset is therefore limited by the size of the optical components (or the mechanical part). Irrespective of the optical components used to create the offset, the optical quality of the overall design should be considered in order obtain inspection images of good quality. This is also a limitation for the amplitude of the offset.

Furthermore, in the embodiment of Figs. 3 and 4, the optical axes of all lenses of the inspection microscope device (including the objective lens system and relay lenses 50, 52) are not only parallel but are also aligned. Advantageously, such construction keeps all components optimally compact transversally and may also further contribute to ease manufacturing and minimize the manufacturing cost of the solution. Furthermore, the wedges 54, 58 may also be positioned such that their center is aligned with the optical axis of the relay lenses 50, 52, which further contributes to ease manufacturing and minimize the manufacturing cost.

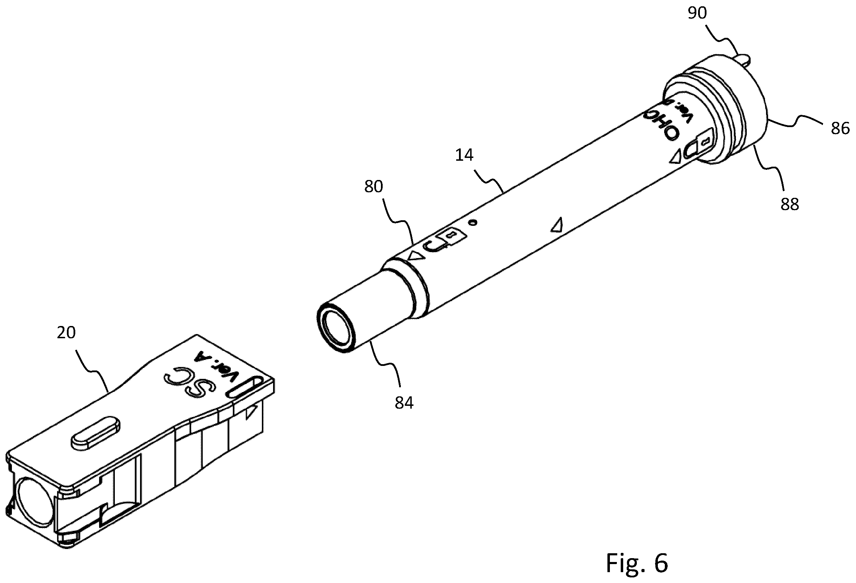

Referring to Figs. 5A, 5B, 6 and 7, the optical head 14 is described in more detail. As shown in Fig. 6, the optical head 14 comprises a substantially elongated hollow member 80 defining a channel between a proximal end 84 and a distal end 86 (proximal and remote relative to the connector endface under inspection), in which illumination light may propagate to and back from the inspected connector endface. The hollow member 80 encloses the relay optics 40 comprising the relay lenses 50, 52 and the wedges 54, 58. At the distal end 86, it further comprises a connection mechanism 88, such as a screw-threaded mechanism or a twist and lock mechanism for example, for releasable connection to the main housing 12. The connection mechanism 88 on the optical head 14 and that of the main housing 12 have complementary engaging features respectively located on the optical head 14 and the main housing 12, configured to fix a clocking orientation of the optical head 14 relative to the main housing 12.

Similarly, the adapter tip 20 may be made releasably connectable to the optical head 14 using a twist and lock mechanism connection mechanism or the like (not shown). The optical head 14 is designed to insert inside the adapter tip 20. The adapter tips can have various lengths depending on the type of connector or bulkhead. Hence, the optical head 14 is made long and narrow in order to support these various configurations. At least part of the elongated hollow member 80 of the optical head 14 may interlock into the hollow member of the adapter tip 20 so that the relay optics 40 of the optical head 14 are positioned within the adapter tip 20 when they are assembled. This configuration allows the relay lens 50 to be located close to the inspected connector endface, i.e., near the inspection end of the microscope device 100.

The optical components inside the optical head 14 are designed and installed to support a specific clocking orientation of the 8-degree angle of the connector endface under inspection. To prevent unsupported clocking orientations, the adapter tip 20 and the optical head 14 comprise complementary engaging features (such as a key and a slot) so that there is only one way to install the adapter tip 20 on the optical head 14.

Similarly, inside the inspection microscope device 100, the light source 31 is positioned with an offset to support a specific clocking orientation of the 8-degree angle of the connector endface. The main housing 12 and the optical head 14 therefore also comprise complementary engaging features (such as a key and a slot) to maintain a specific clocking orientation of the optical head 14 relative to the main housing 12 of the inspection microscope device 100.

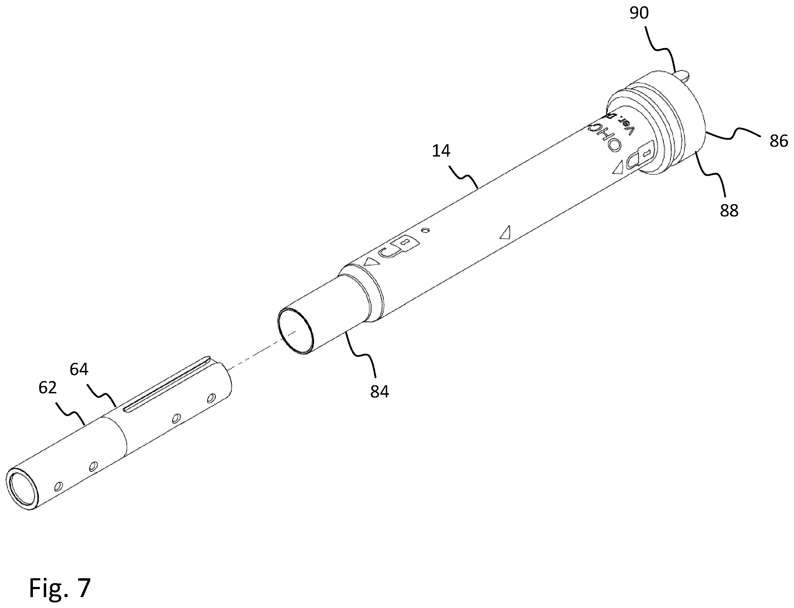

As illustrated in Fig. 7, in order to ease the mechanical assembly of the optical head 14, an optical sub-cell assembly 62 may be used to precisely hold, align, and fix optical components of the optical head 14 (relay lenses 50, 52 and wedges 54, 58). The optical sub-cell assembly 62 comprises a substantially elongated hollow member 64 which is mainly cylindrical, and which outer dimensions are designed to fit inside the hollow member 80 of the optical head 14. The relay optics 40 are mounted in the hollow member 64. Optionally, the hollow members 64 and 80 may comprise complementary engaging features (such as a key and a slot) in order to automatically align one relative to the other so that there is only one possible clocking orientation when they are assembled. The hollow member 64 may further comprise mechanical features on its inner side, such as stoppers or the like, which may serve to automatically align the wedges 54, 58 inside. The optical sub-cell assembly 62 allows easier assembly of the small optical components of the relay optics 40, which would otherwise be deeply recessed inside the slightly bulkier optical head. More specifically, when long and narrow mechanical components such as the optical head 14 are manufactured, it can become hard to manufacture deep holes for optical components. Cost increases, tolerances are harder to meet, to the point that optical performances are highly degraded. The optical sub-cell assembly 62 is shorter, cost effective and easier to manufacture at higher precision.

The optical sub-cell assembly 62 may further offer the possibility to be assembled and be independently tested to validate if the quality criteria are met. It can then be fixed inside more expensive components of different types like the optical head 14 or a different dedicated optical head if required for inspection of specific connector formats. The assembly of the optical components inside the optical sub-cell assembly 62 represents a critical step of the process. Should any reject happen at this stage, only the optical sub-cell assembly 62 may be rejected, improving the overall product cost.

The embodiments described above are intended to be exemplary only and one skilled in the art will recognize that numerous modifications can be made to these embodiments without departing from the scope of the invention.

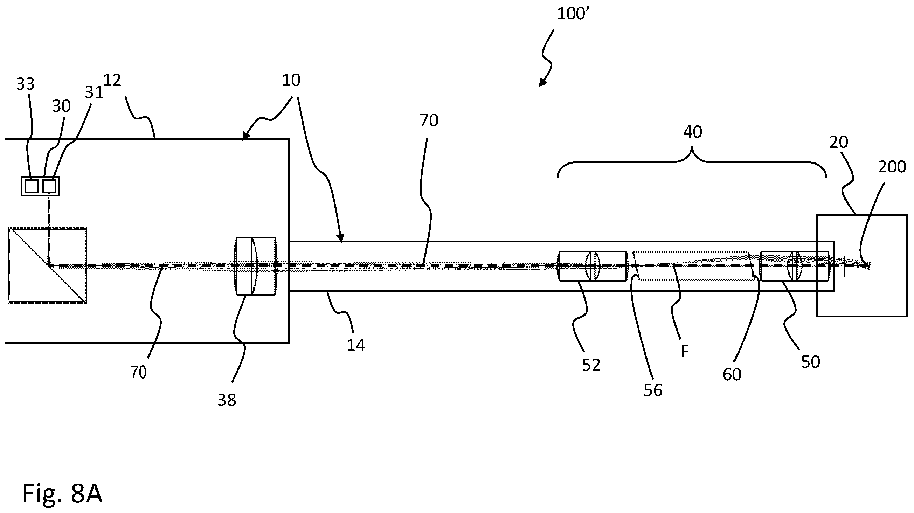

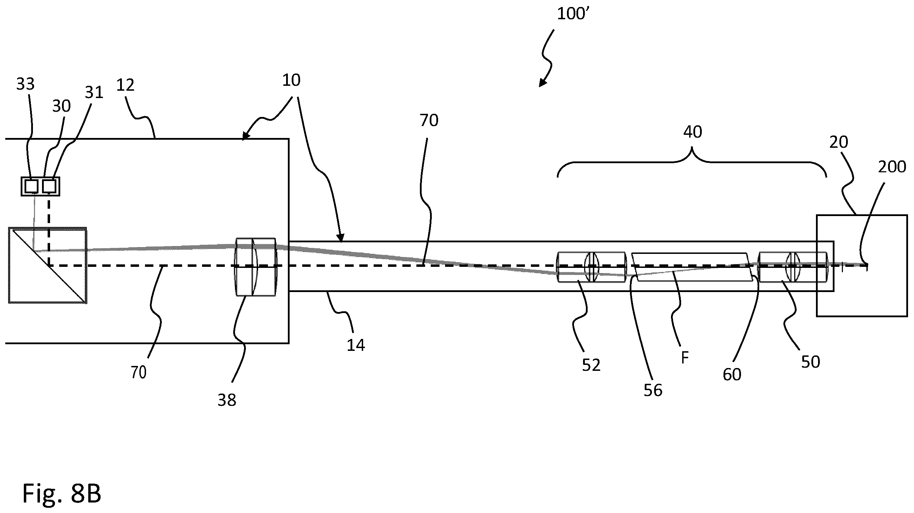

It is noted that other optical components may be used to create the offset and obtain the needed angle of incidence on the inspected endface, such as a tilted plate, a rhomboid prism, an optical prism, etc. For example, in another embodiment illustrated in Figs. 8A and 8B, the two optical wedges 54, 58 are replaced by a single parallelepiped-like optical prism defining the first and the second refracting surfaces 56, 60.

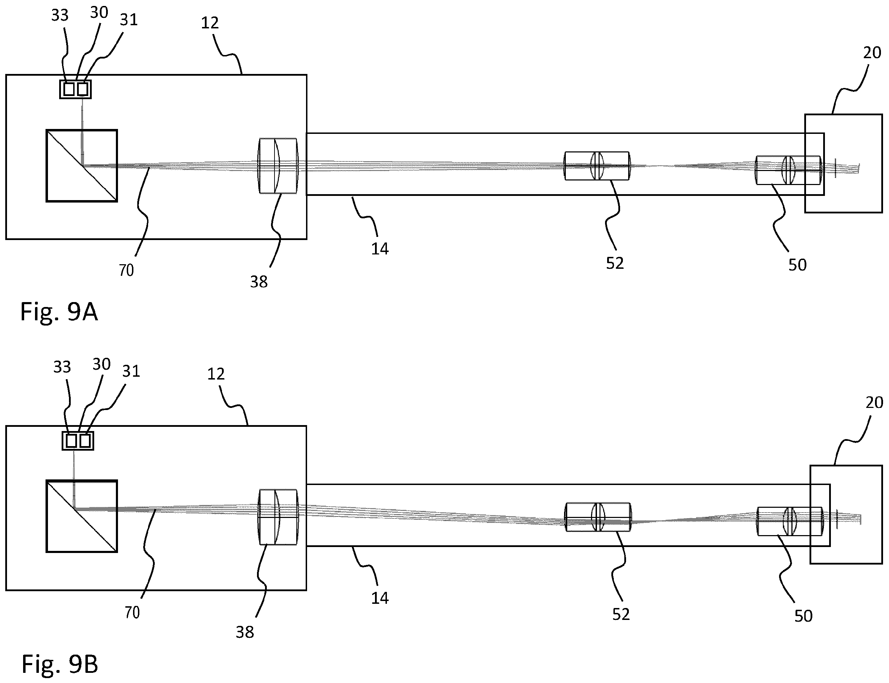

Figs. 9A and 9B illustrate another embodiment of an inspection microscope device in which the relay optics 40 comprise two relay lenses 50, 52 but no optical wedge. In this embodiment, the illumination path is deviated by introducing a transversal offset between the optical axis of the relay lens 50 and that of the objective lens 38. In the illustrated embodiment, the optical axis of the relay lens 52 is aligned with that of the objective lens 38 but other embodiments may further introduce an offset between the relay lens 52 and the objective lens 38. The optical wedges 54, 58 (see Figs. 3A, 3B, 3C) are therefore considered optional. As in the embodiments of Figs. 3 and 4, the relay optics 40 is used to deviate the illumination path so as to illuminate the connector endface in a direction that is substantially normal to the angled-polished connector endface to be inspected. This configuration advantageously requires less optical components. However, optical axes of the objective lens 38 and the relay lens 50 need to be offset relative to one another and relative to the optical fiber center of the inspected connector endface, which may make manufacturing more complex.

Based on the above principles, it is possible to create an optical design that will provide proper illumination and imaging quality in a straight APC/UPC inspection microscope device.

It should be noted that in other embodiments, in order to increase the tilt of the illumination path at the output of the relay optics, there may be used other optical elements that are only needed for illumination and that has no impact on the imaging quality.

The embodiment of Figs. 3 and 4 was optically designed with the goal of optimizing the system as much as possible. It is however noted that other, less optimal but workable solutions may exist. For example, the imaging path of light returning to the image detector after reflection may be slightly different from the illumination path.

Furthermore, it is noted that, ideally, illumination light exits the inspection microscope device 100 at an angle of about 8 degrees but that this angle can be slightly varied without substantially impacting the illumination of the endface and the quality of the inspection images. For example, unless otherwise mentioned, when referring herein to an angle of about 8 degrees, it should be understood that the illumination light exits the inspection microscope device along an illumination path that is at an angle that is between 6 and 10 degrees, and preferably between 7 and 9 degrees, relative to the optical axis of the objective lens system of the inspection microscope device. In other words, in case of a slightly converging or diverging illumination light beam, the center of the light beam exits the inspection microscope device at an angle that is between 6 and 10 degrees, and preferably between 7 and 9 degrees, relative to the optical axis of the objective lens system.

In the embodiment of Figs. 3 and 4, the focusing lens 36 is embodied as a deformable lens. However, in other embodiment, focusing may be achieved by translating the objective lens 38 along the imaging path. However, moving the objective lens 38 relative to the illumination source 30 may slightly change the illumination such that the illumination may vary with the focus.

If needed, it may further be possible to add a mirror in the optical path (anywhere between the connector endface and the optical detector) in order to obtain an angled inspection microscope device 100.

The embodiments described herein may further be adapted to any kind of connectors including simplex, duplex and multifiber connectors.

It will be understood that, for APC connector inspection, the arrangements of Figs. 3, 8 and 9 are configured to support for a given clocking orientation of the APC connector relative to the inspection microscope device 100, i.e., the APC connector under inspection cannot be rotated about the optical-fiber axis.

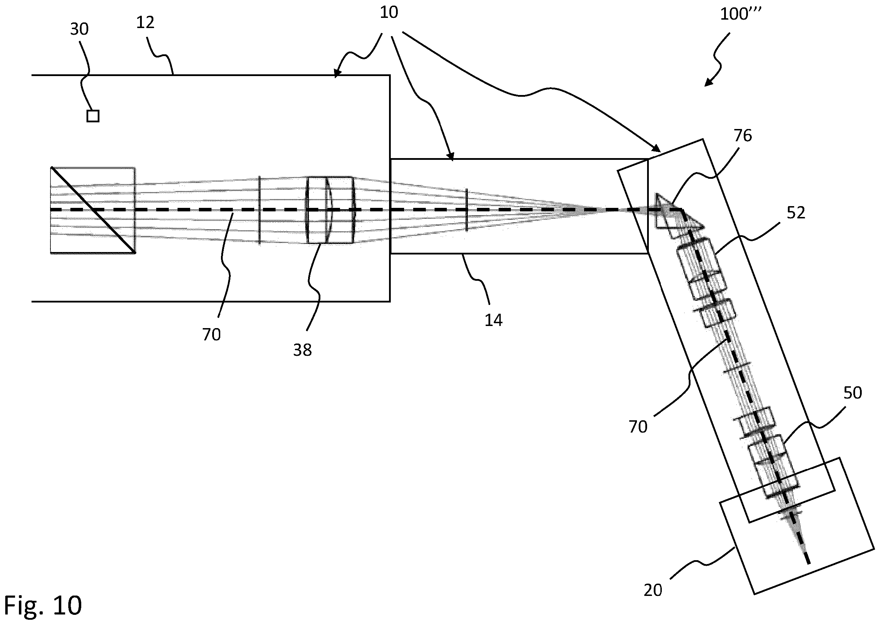

Fig. 10 illustrates yet another embodiment of an inspection microscope device 100‴ in which the optical head 14 is kinked in order to provide an angled inspection microscope device 100 adapted to reach optical connectors which may otherwise be very difficult to reach. In order to deflect the optical axis 70 of the objective lens 38, a reflective device 76 (such as a mirror or a prism) is introduced along the optical path, here between the objective lens 38 and the relay optics 40. Illumination light therefore exits the housing structure 10 of the inspection microscope device 100‴ along an illumination path that is at an angle of about 0 or 8 degrees relative to the deflected optical axis 70.

### Example of inspection microscope device architecture

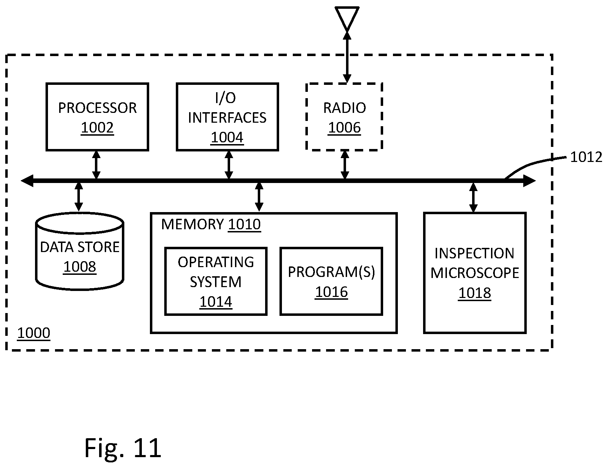

Fig. 11 is a block diagram of an inspection microscope device 1000 which may embody the inspection microscope device 10 of Figs. 2, 3, 4, 8, 9, 10 and 11. The inspection microscope device 1000 may comprise a digital device that, in terms of hardware architecture, generally includes a processor 1002, input/output (I/O) interfaces 1004, an optional radio 1006, a data store 1008, a memory 1010, as well as an optical test device including an inspection microscope 1018. It should be appreciated by those of ordinary skill in the art that Fig. 11 depicts the inspection microscope device 1000 in a simplified manner, and a practical embodiment may include additional components and suitably configured processing logic to support known or conventional operating features that are not described in detail herein. A local interface 1012 interconnects the major components. The local interface 1012 can be, for example, but not limited to, one or more buses or other wired or wireless connections, as is known in the art. The local interface 1012 can have additional elements, which are omitted for simplicity, such as controllers, buffers (caches), drivers, repeaters, and receivers, among many others, to enable communications. Further, the local interface 1012 may include address, control, and/or data connections to enable appropriate communications among the aforementioned components.

The processor 1002 is a hardware device for executing software instructions. The processor 1002 may comprise one or more processors, including central processing units (CPU), auxiliary processor(s) or generally any device for executing software instructions. When the inspection microscope device 1000 is in operation, the processor 1002 is configured to execute software stored within the memory 1010, to communicate data to and from the memory 1010, and to generally control operations of the inspection microscope device 1000 pursuant to the software instructions. The processor 1002 may implement a controller used to control the operation of the image detectors and the illumination sources of the inspection microscope 1018. The controller may further be used to control the focusing lens 35 for adjusting a focus of the objective lens system.

In an embodiment, the processor 1002 may include an optimized mobile processor such as optimized for power consumption and mobile applications. The I/O interfaces 1004 can be used to receive user input from and/or for providing system output. User input can be provided via, for example, a keypad, a touch screen, a scroll ball, a scroll bar, buttons, barcode scanner, and the like. System output can be provided via a display device such as a liquid crystal display (LCD), touch screen, and the like, via one or more LEDs or a set of LEDs, or via one or more buzzer or beepers, etc. The I/O interfaces 1004 can be used to display a graphical user interface (GUI) that enables a user to interact with the inspection microscope device 1000 and/or output at least one of the values derived by the inspection microscope analyzing software.

The radio 1006, if included, may enable wireless communication to an external access device or network. Any number of suitable wireless data communication protocols, techniques, or methodologies can be supported by the radio 1006, including, without limitation: RF; IrDA (infrared); Bluetooth; ZigBee (and other variants of the IEEE 802.15 protocol); IEEE 802.11 (any variation); IEEE 802.16 (WiMAX or any other variation); Direct Sequence Spread Spectrum; Frequency Hopping Spread Spectrum; Long Term Evolution (LTE); cellular/wireless/cordless telecommunication protocols (e.g. 3G/4G, etc.); NarrowBand Internet of Things (NB-loT); Long Term Evolution Machine Type Communication (LTE-M); magnetic induction; satellite data communication protocols; and any other protocols for wireless communication. The data store 1008 may be used to store data, such as inspection microscope images. The data store 1008 may include any of volatile memory elements (e.g., random access memory (RAM, such as DRAM, SRAM, SDRAM, and the like)), nonvolatile memory elements (e.g., ROM, hard drive, tape, CDROM, and the like), and combinations thereof. Moreover, the data store 1008 may incorporate electronic, magnetic, optical, and/or other types of storage media.

The memory 1010 may include any of volatile memory elements (e.g., random access memory (RAM, such as DRAM, SRAM, SDRAM, etc.)), nonvolatile memory elements (e.g., ROM, hard drive, etc.), and combinations thereof. Moreover, the memory 1010 may incorporate electronic, magnetic, optical, and/or other types of storage media. Note that the memory 1010 may have a distributed architecture, where various components are situated remotely from one another, but can be accessed by the processor 1002. The software in memory 1010 can include one or more computer programs, each of which includes an ordered listing of executable instructions for implementing logical functions. In the example of Fig. 11, the software in the memory 1010 includes a suitable operating system (O/S) 1014 and computer programs 1016. The operating system 1014 essentially controls the execution of other computer programs and provides scheduling, input-output control, file and data management, memory management, and communication control and related services. The program(s) 1016 may include various applications, add-ons, etc. configured to provide end-user functionality with the inspection microscope device 1000. For example, example programs 1016 may include a web browser to connect with a server for transferring inspection result data files, a dedicated inspection microscope application configured to control inspection microscope measurements by the inspection microscope 1018, set image acquisition parameters, analyze connector endface images obtained by the inspection microscope 1018 and display a GUI related to the inspection microscope device 1000.

It is noted that, in some embodiments, the I/O interfaces 1004 may be provided via a physically distinct mobile device (not shown), such as a handheld computer, a smartphone, a tablet computer, a laptop computer, a wearable computer or the like, e.g., communicatively coupled to the inspection microscope device 1000 via the radio 1006. In such cases, at least some of the programs 1016 may be located in a memory of such a mobile device, for execution by a processor of the physically distinct device. The mobile may then also include a radio and be used to transfer measurement data files toward a remote test application residing, e.g., on a server.

Although the present disclosure has been illustrated and described herein with reference to specific embodiments and examples thereof, it will be readily apparent to those of ordinary skill in the art that other embodiments and examples may perform similar functions and/or achieve like results. All such equivalent embodiments and examples are within the spirit and scope of the present disclosure, are contemplated thereby, and are intended to be covered by the following claims.

## Claims

1. An optical-fiber connector endface inspection microscope device for inspecting an endface of either an angled-polished or a non-angled-polished optical-fiber connector, the optical-fiber connector endface inspection microscope device comprising:
an illumination source generating illumination light for illuminating the endface to be inspected in accordance with a first mode of operation and a second mode of operation, wherein in said first mode of operation, said illumination light propagates along a first illumination path and, in said second mode of operation, said illumination light propagates along a second illumination path that is transversally offset relative to said first illumination path;
an image detector for capturing at least one image of the endface to be inspected from light returned from the endface;
an objective lens system comprising at least one objective lens to produce an image of the endface to be inspected on the image detector, the objective lens system defining an optical axis;
relay optics receiving said illumination light for illuminating the connector endface, and configured to deviate said first illumination path so as to illuminate the connector endface in a direction that is substantially normal to an angled-polished connector endface to be inspected and relay said second illumination path so as to illuminate the connector endface in a direction that is substantially normal to a non-angled-polished connector endface to be inspected; and
a housing structure enclosing said illumination source, said image detector, said objective lens system and said relay optics, said housing structure being releasably connectable to an adapter tip for mechanically interfacing with the optical-fiber connector.

2. The optical-fiber connector endface inspection microscope device as claimed in claim 1, wherein, in said first mode of operation, illumination light exits said housing structure along said first illumination path that is at an angle of about 8 degrees relative to the optical axis of the objective lens system.

3. The optical-fiber connector endface inspection microscope device as claimed in claim 1 or 2, wherein said housing structure comprises a main housing and an optical head connectable to the main housing; wherein the optical head is releasably connectable to an adapter tip for mechanically interfacing with the optical-fiber connector to be inspected and defining a position of the connector endface on an object plane for inspection; and wherein said relay optics are enclosed in the optical head.

4. The optical-fiber connector endface inspection microscope device as claimed in claim 3, wherein the adapter tip is interchangeable with other adapter tips to allow inspection of various types of optical-fiber connectors, whereas the optical head and the adapter tip remains the same for inspection of both angled-polished and non-angled-polished versions of the same type of optical-fiber connector.

5. The optical-fiber connector endface inspection microscope device as claimed in any one of claims 1 to 4,
wherein said illumination source comprises a first light source and a second light source for generating illumination light to said first illumination path and to said second illumination path, respectively.

6. The optical-fiber connector endface inspection microscope device as claimed in claim 5,
wherein, in a first mode of operation, said first light source is activated and said second light source is deactivated; and
wherein, in a second mode of operation, said first light source is deactivated and said second light source is activated.

7. The optical-fiber connector endface inspection microscope device as claimed in any one of claims 1 to 6, wherein said second illumination path is transversally offset relative to the optical axis of the objective lens so as to deviate said second illumination path from said optical axis through said objective lens.

8. The optical-fiber connector endface inspection microscope device as claimed in claim 7, wherein said relay optics comprises:
a first relay lens and a second relay lens along both said first and said second illumination paths and receiving illumination light from said objective lens system,
wherein said first relay lens and said second relay lens contribute to deviate said second illumination path back to an angle of about 0 degrees relative to the optical axis of said objective lens at an output of said relay optics.

9. The optical-fiber connector endface inspection microscope device as claimed in claim 8,
wherein said first illumination path is substantially aligned with an optical axis of the objective lens, and
wherein said first relay lens and said second relay lens contribute to deviate said first illumination path to an angle of about 8 degrees relative to the optical axis of said objective lens at an output of said relay optics.

10. The optical-fiber connector endface inspection microscope device as claimed in claim 9, wherein said relay optics further comprises:
a first refracting plane surface and a second refracting plane surface in-between said first relay lens and second relay lens, wherein said first refracting plane surface and said second refracting plane surface are both tilted relative to optical axes of said first relay lens and second relay lens so as to, together with said first relay lens and said second relay lens, deviate said first illumination path at an angle that is substantially egal to 8 degrees relative to the optical axis of said objective lens system when said illumination light exits said relay optics.

11. The optical-fiber connector endface inspection microscope device as claimed in claim 10, wherein optical axes of said objective lens system, said first relay lens and second relay lens are substantially parallel to an optical fiber axis of said optical-fiber connector during inspection.

12. The optical-fiber connector endface inspection microscope device as claimed in claim 11, wherein optical axes of said objective lens system and of said first relay lens and second relay lens are all substantially aligned to a center of the connector endface during inspection.

13. The optical-fiber connector endface inspection microscope device as claimed in any one of claims 10 to 12, wherein said relay optics comprise a first optical wedge and a second optical wedge along said first and second illumination paths, wherein a surface of said first optical wedge defines said first refracting plane surface and a surface of said second optical wedge defines said second refracting plane surface.

14. The optical-fiber connector endface inspection microscope device as claimed in any one of claims 1 to 13, wherein said angle of said illumination path at the exit of said housing structure relative to the optical axis of said objective lens is between 6 and 10 degrees, and preferably between 7 and 9 degrees.

15. An optical-fiber connector endface inspection microscope system for inspecting an endface of either a non-angled-polished or an angled-polished optical-fiber connector, the optical-fiber connector endface inspection microscope system comprising:
an optical-fiber connector endface inspection microscope device comprising:
an illumination source generating illumination light for illuminating the endface to be inspected, wherein in a first mode of operation said illumination light propagates along a first illumination path and in a second mode of operation said illumination light propagates along a second illumination path that is transversally offset relative to said first illumination path;
an image detector for capturing at least one image of the endface to be inspected from light returned from the endface;
an objective lens system comprising at least one objective lens to produce an image of the endface to be inspected on the image detector, the objective lens system defining an optical axis;
relay optics receiving said illumination light for illuminating the connector endface, and configured to, in a first mode of operation, deviate said first illumination path so as to illuminate the connector endface in a direction that is substantially normal to the angled-polished connector endface to be inspected and, in a second mode of operation, relay said second illumination path so as to illuminate the connector endface in a direction that is substantially normal to the non-angled-polished connector endface to be inspected; and
a housing structure enclosing said illumination source, said image detector, said objective lens system and said relay optics, said housing structure being releasably connectable to an adapter tip for mechanically interfacing with the optical-fiber connector;
wherein said housing structure comprises a main housing and an optical head connectable to the main housing, said relay optics being enclosed in the optical head; and
an adapter tip releasably connectable to the optical head, for mechanically interfacing with the optical-fiber connector to be inspected and configured to position the connector endface on an object plane for inspection such that an optical fiber axis of said optical-fiber connector is substantially parallel to the optical axis of said objective lens system.
